# EUROPEAN PATENT APPLICATION

(11) **EP 4 325 622 A1**
(43) Date of publication of application: **21.02.2024**
(21) Application number: 22815773.1
(22) Date of filing: 28.04.2022
(51) Int. Cl.: H01M 10/0569, H01M 10/052, H01M 10/0567, H01M 10/0568

(54) **SECONDARY BATTERY ELECTROLYTE SOLUTION AND SECONDARY BATTERY**

(30) Priority: 03.06.2021 JP 2021093724
(71) Applicant: Murata Manufacturing Co., Ltd., Nagaokakyo-shi, Kyoto 617-8555 (JP)
(72) Inventor: SAKUMA Tomomi, Nagaokakyo-shi, Kyoto 617-8555 (JP); SHIMAMURA Tomoaki, Nagaokakyo-shi, Kyoto 617-8555 (JP); ANDO Muneaki, Nagaokakyo-shi, Kyoto 617-8555 (JP)
(74) Representative: Witte, Weller & Partner Patentanwälte mbB
(86) International application number: PCT/JP2022/019256
(87) International publication number: WO 2022/255018

(57) **Abstract**

A secondary battery includes a positive electrode, a negative electrode, and an electrolytic solution. The electrolytic solution includes a carboxylic acid ester represented by Formula (1) and a carbamic acid ester compound represented by Formula (2).

R1-C(=O)-O-R2 ...... (1)

where:
each of R1 and R2 is an alkyl group; and
carbon number of R1 is greater than or equal to 1 and less than or equal to 3, and a sum of the carbon number of R1 and carbon number of R2 is greater than or equal to 3 and less than or equal to 5.

R3-NH-C(=O)-O-R4 ...... (2)

where:
each of R3 and R4 is an alkyl group; and
a sum of carbon number of R3 and carbon number of R4 is greater than or equal to 2 and less than or equal to 6.

## Description

### Technical Field

The technology relates to an electrolytic solution for a secondary battery, and a secondary battery.

### Background Art

Various kinds of electronic equipment, including mobile phones, have been widely used. Such widespread use has promoted development of a secondary battery as a power source that is smaller in size and lighter in weight and allows for a higher energy density. The secondary battery includes a positive electrode, a negative electrode, and an electrolytic solution (an electrolytic solution for a secondary battery). A configuration of the secondary battery has been considered in various ways.

Specifically, in order to improve, for example, thermal stability, an eutectic mixture of an amide group-containing compound and a lithium salt such as LiN(CF₃SO₂)₂ is used as an additive of an electrolytic solution (for example, see PTL 1). In order to prevent occurrence of an abnormal exothermic reaction upon overchaging, a carbamate is used as an additive of an electrolytic solution (for example, see PTL 2).

In addition, in order to improve a high-temperature storage characteristic, a chain carbamic acid ester is used as a solvent of an electrolytic solution (for example, see PTL 3). Further, in order to improve a pulse discharge characteristic, a predetermined amount of an carboxylic acid ester is used as a solvent of an electrolytic solution (for example, see PTL 4).

### Citation List

### Patent Literature

PTL 1: Japanese Unexamined Patent Application Publication (Published Japanese Translation of PCT Application) No. 2010-524188
PTL 2: Japanese Unexamined Patent Application Publication No. H06-111848
PTL 3: Japanese Unexamined Patent Application Publication No. 2006-286517
PTL 4: Japanese Unexamined Patent Application Publication No. 2019-061827

### Summary of the Invention

Although consideration has been given in various ways regarding a configuration of a secondary battery, the secondary battery still remains insufficient in a high-temperature storage characteristic and a low-temperature discharge characteristic. Accordingly, there is room for improvement in terms thereof.

It is therefore desirable to provide an electrolytic solution for a secondary battery and a secondary battery each of which makes it possible to achieve a superior high-temperature storage characteristic and a superior low-temperature discharge characteristic.

An electrolytic solution for a secondary battery according to an embodiment of the technology includes a carboxylic acid ester represented by Formula (1) and a carbamic acid ester compound represented by Formula (2).

R1-C(=O)-O-R2 ...... (1)

where:
each of R1 and R2 is an alkyl group; and
carbon number of R1 is greater than or equal to 1 and less than or equal to 3, and a sum of the carbon number of R1 and carbon number of R2 is greater than or equal to 3 and less than or equal to 5,

R3-NH-C(=O)-O-R4 ...... (2)

where:
each of R3 and R4 is an alkyl group; and
a sum of carbon number of R3 and carbon number of R4 is greater than or equal to 2 and less than or equal to 6.

A secondary battery according to an embodiment of the technology includes a positive electrode, a negative electrode, and an electrolytic solution. The electrolytic solution has a configuration similar to the configuration of the electrolytic solution for a secondary battery according to the embodiment of the technology described above.

According to the electrolytic solution for a secondary battery or the secondary battery of the embodiment of the technology, the electrolytic solution for a secondary battery includes the carboxylic acid ester and the carbamic acid ester compound, which makes it possible to achieve a superior high-temperature storage characteristic and a superior low-temperature discharge characteristic.

Note that effects of the technology are not necessarily limited to those described above and may include any of a series of effects described below in relation to the technology.

### Brief Description of Drawings

[FIG. 1] FIG. 1 is a sectional view of a configuration of a secondary battery according to one embodiment of the technology.
[FIG. 2] FIG. 2 is a sectional view of a configuration of a battery device illustrated in FIG. 1.
[FIG. 3] FIG. 3 is a block diagram illustrating a configuration of an application example of the secondary battery.

### Modes for Carrying Out the Invention

Some embodiments of the technology are described below in detail with reference to the drawings. The description is given in the following order.
1. Electrolytic Solution for Secondary Battery
   1-1. Configuration
   1-2. Manufacturing Method
   1-3. Action and Effects
2. Secondary Battery
   2-1. Configuration
   2-2. Operation
   2-3. Manufacturing Method
   2-4. Action and Effects
3. Modifications
4. Applications of Secondary Battery

### <1. Electrolytic Solution for Secondary Battery>

A description is given first of an electrolytic solution for a secondary battery (hereinafter simply referred to as an "electrolytic solution") according to an embodiment of the technology.

The electrolytic solution is to be used in a secondary battery. However, the electrolytic solution may be used in any of electrochemical devices other than a secondary battery. Such other electrochemical devices are not particularly limited in kind, and specific examples thereof include a capacitor.

### <1-1. Configuration>

The electrolytic solution is a liquid electrolyte. The electrolytic solution includes a carboxylic acid ester and a carbamic acid ester compound.

A reason why the electrolytic solution includes the carboxylic acid ester and the carbamic acid ester compound together is that this helps to prevent a discharge capacity of the secondary battery using the electrolytic solution from decreasing either in a low-temperature environment or in a high-temperature environment.

Specifically, the electrolytic solution includes the carboxylic acid ester having low viscosity, which improves ion conductivity in the electrolytic solution. This helps to prevent electric resistance of the secondary battery from increasing in the low-temperature environment, thus helping to prevent the discharge capacity from decreasing even if the secondary battery is used in the low-temperature environment.

Further, the electrolytic solution includes the carbamic acid ester compound, which causes a film derived from the carbamic acid ester compound to be formed on a surface of an electrode upon an electrode reaction. The film has high heat resistance, and is therefore resistant to reductive decomposition also in the high-temperature environment. This suppresses decomposition of the carboxylic acid ester in the high-temperature environment, thus helping to prevent the discharge capacity from decreasing even if the secondary battery is stored in the high-temperature environment.

As a result, both suppression of increase in the electric resistance in the low-temperature environment and suppression of decomposition of the carboxylic acid ester in the high-temperature environment are achieved. This helps to prevent the discharge capacity from decreasing either in the low-temperature environment or in the high-temperature environment.

### [Carboxylic Acid Ester]

The carboxylic acid ester includes one or more of compounds represented by Formula (1). That is, only one carboxylic acid ester may be used, or two or more carboxylic acid esters may be used.

R1 C(=O) O R2 ...... (1)

where:
each of R1 and R2 is an alkyl group; and
carbon number of R1 is greater than or equal to 1 and less than or equal to 3, and a sum of the carbon number of R1 and carbon number of R2 is greater than or equal to 3 and less than or equal to 5.

### (Configuration)

Each of R1 and R2 is an alkyl group, as described above. The alkyl group is a monovalent group including carbon and hydrogen, and may have a straight-chain structure, or a branched structure. Specific examples of the alkyl group include a methyl group, an ethyl group, a propyl group, a butyl group, and a pentyl group.

However, in order to help to prevent the electric resistance of the secondary battery from increasing in the low-temperature environment, the carbon number of R1 and the carbon number of R2 satisfy two conditions.

First, the carbon number of R1 is within a range from 1 to 3 both inclusive, as described above. The kind of a carboxylic acid that forms the carboxylic acid ester is one of an acetic acid (R1 = 1), a propionic acid (R1 = 2), or a butyric acid (R1 = 3).

Second, the sum of the carbon number of R1 and the carbon number of R2 is within a range from 3 to 5 both inclusive, as described above. The kind of the carboxylic acid ester is one of an acetic acid ester (R1 = 1 and R2 = 2 to 4 both inclusive), a propionic acid ester (R1 = 2 and R2 = 1 to 3 both inclusive), or a butyric acid ester (R1 = 3 and R4 = 1 or 2) that satisfies the condition for the sum described above.

Based upon the foregoing, specific examples of the carboxylic acid ester include compounds that satisfy the two conditions described above, that is, a series of compounds to be described below.

Specific examples of the acetic acid ester (R1 = 1) include ethyl acetate (R2 = 2), propyl acetate (R2 = 3), and butyl acetate (R2 = 4).

Specific examples of the propionic acid ester (R1 = 2) include methyl propionate (R2 =1), ethyl propionate (R2 = 2), and propyl propionate (R2 = 3).

Specific examples of the butyric acid ester (R1 = 3) include methyl butyrate (R2 = 1) and ethyl butyrate (R2 = 2).

For confirmation, as described above, the alkyl group that is each of R1 and R2 may have a branched structure without being limited to a straight-chain structure. For example, the propyl group may be a n-propyl group (-CH₂CH₂CH₃) or an isopropyl group (-CH(CH₃)₂). The butyl group may be a n-butyl group (-CH₂CH₂CH₂CH₃), a sec-butyl group (-CH(CH₃)CH₂CH₃), an isobutyl group (-CH₂CH(CH₃)₂), or a tert-butyl group (-C(CH₃)₃).

Note that a compound that does not satisfy the two conditions described above is excluded from the carboxylic acid ester described here. Specific examples of the compound that does not satisfy the two conditions include propyl formate (R1 = 0 and R2 = 3), methyl acetate (R1 = 1 and R2 = 1), and butyl propionate (R1 = 2 and R2 = 4).

### (Content)

A content of the carboxylic acid ester in the electrolytic solution is not particularly limited. In particular, when the electrolytic solution includes a solvent to be described later and the solvent includes the carboxylic acid ester, the content of the carboxylic acid ester in the solvent is preferably within a range from 30 vol% to 70 vol% both inclusive. A reason for this is that this further helps to prevent the electric resistance of the secondary battery from increasing in the low-temperature environment.

### [Carbamic Acid Ester Compound]

The carbamic acid ester compound is an ester of a carbamic acid in which a substituent group is introduced to an amino group, and includes one or more of compounds represented by Formula (2). That is, only one carbamic acid ester compound may be used, or two or more carbamic acid ester compounds may be used.

R3-NH-C(=O)-O-R4 ...... (2)

where:
each of R3 and R4 is an alkyl group; and
a sum of carbon number of R3 and carbon number of R4 is greater than or equal to 2 and less than or equal to 6.

### (Configuration)

Each of R3 and R4 is an alkyl group, as described above. Details of the alkyl group are as described above.

However, in order to suppress decomposition of the carboxylic acid ester in the high-temperature environment, the sum of the carbon number of R3 and the carbon number of R4 is within a range from 2 to 6 both inclusive.

Based upon the foregoing, the carbamic acid ester compound is one of a methylcarbamic acid ester (R3 = 1), an ethylcarbamic acid ester (R3 = 2), a propylcarbamic acid ester (R3 = 3), a butylcarbamic acid ester (R3 = 4), or a pentylcarbamic acid ester (R3 = 5) that satisfies the condition for the sum described above, that is, a series of compounds to be described below.

Specific examples of the methylcarbamic acid ester (R3 = 1) include methyl methylcarbamate (R4 = 1), ethyl methylcarbamate (R4 = 2), propyl methylcarbamate (R4 = 3), butyl methylcarbamate (R4 = 4), and pentyl methylcarbamate (R4 = 5).

Specific examples of the ethylcarbamic acid ester (R3 = 2) include methyl ethylcarbamate (R4 = 1), ethyl ethylcarbamate (R4 = 2), propyl ethylcarbamate (R4 = 3), and butyl ethylcarbamate (R4 = 4).

Specific examples of the propylcarbamic acid ester (R3 = 3) include methyl propylcarbamate (R4 = 1), ethyl propylcarbamate (R4 = 2), and propyl propylcarbamate (R4 = 3).

Specific examples of the butylcarbamic acid ester (R3 = 4) include methyl butylcarbamate (R4 = 1), and ethyl butylcarbamate (R4 = 2).

Specific examples of the pentylcarbamic acid ester (R3 = 5) include methyl pentylcarbamate (R4 = 1).

Note that a compound that does not satisfy the condition for the sum described above is excluded from the carbamic acid ester compound described here. Specific examples of the compound that does not satisfy the condition for the sum include methyl carbamate (R3 = 0 and R4 = 1), methyl hexylcarbamate (R3 = 6 and R4 = 1), and hexyl methylcarbamate (R3 = 1 and R4 = 6).

### (Content)

A content of the carbamic acid ester compound in the electrolytic solution is not particularly limited. The content of the carbamic acid ester compound in the electrolytic solution is preferably within a range from 0.01 wt% to 5 wt% both inclusive, in particular. A reason for this is that this substantially further suppresses decomposition of the carboxylic acid ester in the high-temperature environment.

### [Solvent]

Note that the electrolytic solution may further include one or more of solvents.

The solvent includes one or more of non-aqueous solvents (organic solvents), and the electrolytic solution including the non-aqueous solvent(s) is what is called a non-aqueous electrolytic solution. The non-aqueous solvent is, for example, an ester or an ether, more specifically, a carbonic-acid-ester-based compound or a lactone-based compound, for example.

The carbonic-acid-ester-based compound is, for example, a cyclic carbonic acid ester or a chain carbonic acid ester. Specific examples of the cyclic carbonic acid ester include ethylene carbonate and propylene carbonate. Specific examples of the chain carbonic acid ester include dimethyl carbonate, diethyl carbonate, and ethyl methyl carbonate.

The lactone-based compound is, for example, a lactone. Specific examples of the lactone include γ-butyrolactone and γ-valerolactone.

Note that the ether may be, for example, 1,2-dimethoxyethane, tetrahydrofuran, 1,3-dioxolane, or 1,4-dioxane, other than the lactone-based compound described above.

### [Electrolyte Salt]

In addition, the electrolytic solution may further include one or more of electrolyte salts. The electrolyte salt is a light metal salt, and is more specifically a lithium salt, for example.

Specific examples of the lithium salt include lithium hexafluorophosphate (LiPF₆), lithium tetrafluoroborate (LiBF₄), lithium trifluoromethanesulfonate (LiCF₃SO₃), lithium pentafluoroethanesulfonate (LiC₂F₅SO₃), lithium bis(fluorosulfonyl)imide (LiN(FSO₂)₂), lithium bis(trifluoromethanesulfonyl)imide (LiN(CF₃SO₂)₂), lithium bis(pentafluoroethanesulfonyl)imide (LiN(C₂F₅SO₂)₂), lithium tris(trifluoromethanesulfonyl)methide (LiC(CF₃SO₂)₃), lithium bis(oxalato)borate (LiB(C₂O₄)₂), lithium difluoro(oxalato)borate (LiB(C₂O₄)F₂), lithium monofluorophosphate (Li₂PFO₃), and lithium difluorophosphate (LiPF₂O₂).

Among the above, the electrolyte salt preferably includes lithium bis(fluorosulfonyl)imide. A reason for this is that a high discharge capacity is obtainable.

A content of the electrolyte salt is not particularly limited, and is specifically within a range from 0.3 mol/kg to 3.0 mol/kg both inclusive with respect to the solvent. A reason for this is that high ion conductivity is obtainable.

### [Additive]

Note that the electrode solution may further include one or more of additives. The additives are not particularly limited in kind, and specific examples thereof include an unsaturated cyclic carbonic acid ester, a halogenated carbonic acid ester, a phosphoric acid ester, an acid anhydride, a nitrile compound, and an isocyanate compound. A reason for this is that chemical stability of the electrolytic solution improves, and decomposition of the electrolytic solution is therefore suppressed.

Specific examples of the unsaturated cyclic carbonic acid ester include vinylene carbonate, vinylethylene carbonate, and methylene ethylene carbonate. Specific examples of the halogenated carbonic acid ester include a halogenated cyclic carbonic acid ester and a halogenated chain carbonic acid ester. Specific examples of the halogenated cyclic carbonic acid ester include monofluoroethylene carbonate and difluoroethylene carbonate. Specific examples of the halogenated chain carbonic acid ester include fluoromethyl methyl carbonate, bis(fluoromethyl)carbonate, and difluoromethyl methyl carbonate. Specific examples of the phosphoric acid ester include trimethyl phosphate and triethyl phosphate.

The acid anhydride is a dicarboxylic acid anhydride, a disulfonic acid anhydride, or a carboxylic acid sulfonic acid anhydride, for example. Specific examples of the dicarboxylic acid anhydride include succinic anhydride, glutaric anhydride, and maleic anhydride. Specific examples of the disulfonic acid anhydride include ethanedisulfonic anhydride and propanedisulfonic anhydride. Specific examples of the carboxylic acid sulfonic acid anhydride include sulfobenzoic anhydride, sulfopropionic anhydride, and sulfobutyric anhydride.

The nitrile compound is a mononitrile compound, a dinitrile compound, or a trinitrile compound, for example. Specific examples of the mononitrile compound include acetonitrile. Specific examples of the dinitrile compound include succinonitrile, glutaronitrile, adiponitrile, and 3,3'-(ethylenedioxy)dipropionitrile. Specific examples of the trinitrile compound include 1,2,3-propanetricarbonitrile, 1,3,5-pentanetricarbonitrile, 1,3,4-hexanetricarbonitrile, 1,3,6-hexanetricarbonitrile, 1,3,5-cyclohexanetricarbonitrile, and 1,3,5-benzenetricarbonitrile. And so on. Specific examples of the isocyanate compound include hexamethylene diisocyanate.

### <1-2. Manufacturing Method>

When manufacturing the electrolytic solution, the electrolyte salt is added to the solvent including the carboxylic acid ester, following which the carbamic acid ester compound is added to the solvent. The electrolyte salt and the carbamic acid ester compound are thereby each dispersed or dissolved in the solvent including the carboxylic acid ester. As a result, the electrolytic solution is prepared.

### <1-3. Action and Effects>

According to the electrolytic solution, the electrolytic solution includes the carboxylic acid ester and the carbamic acid ester compound. As described above, this helps to prevent the electric resistance of the secondary battery from increasing in the low-temperature environment and suppresses decomposition of the carboxylic acid ester in the high-temperature environment, thus helping to prevent the discharge capacity of the secondary battery using the electrolytic solution from decreasing either in the low-temperature environment or in the high-temperature environment. It is thus possible for the secondary battery using the electrolytic solution to achieve a superior high-temperature storage characteristic and a superior low-temperature discharge characteristic.

In particular, the solvent of the electrolytic solution may include the carboxylic acid ester, and the content of the carboxylic acid ester in the solvent may be within a range from 30 vol% to 70 vol% both inclusive. This further helps to prevent the electric resistance of the secondary battery from increasing in the low-temperature environment. Accordingly, it is possible to achieve higher effects.

In addition, the content of the carbamic acid ester compound in the electrolytic solution may be within a range from 0.01 wt% to 5 wt% both inclusive. This further suppresses decomposition of the carboxylic acid ester in the high-temperature environment. Accordingly, it is possible to achieve higher effects.

In addition, the electrolyte salt of the electrolytic solution may include lithium bis(fluorosulfonyl)imide. This makes it possible to obtain a high discharge capacity. Accordingly, it is possible to achieve higher effects.

### <2. Secondary Battery>

A description is given next of a secondary battery including the electrolytic solution described above.

The secondary battery to be described here is a secondary battery that obtains a battery capacity using insertion and extraction of an electrode reactant, and includes a positive electrode, a negative electrode, and an electrolytic solution.

Although not particularly limited in kind, the electrode reactant is specifically a light metal such as an alkali metal or an alkaline earth metal. Specific examples of the alkali metal include lithium, sodium, and potassium. Specific examples of the alkaline earth metal include beryllium, magnesium, and calcium.

Examples are given below of a case where the electrode reactant is lithium. A secondary battery that obtains a battery capacity using insertion and extraction of lithium is what is called a lithium-ion secondary battery. In the lithium-ion secondary battery, lithium is inserted and extracted in an ionic state.

Here, a charge capacity of the negative electrode is greater than a discharge capacity of the positive electrode. In other words, an electrochemical capacity per unit area of the negative electrode is set to be greater than an electrochemical capacity per unit area of the positive electrode. This is to prevent precipitation of the electrode reactant on a surface of the negative electrode during charging.

### <2-1. Configuration>

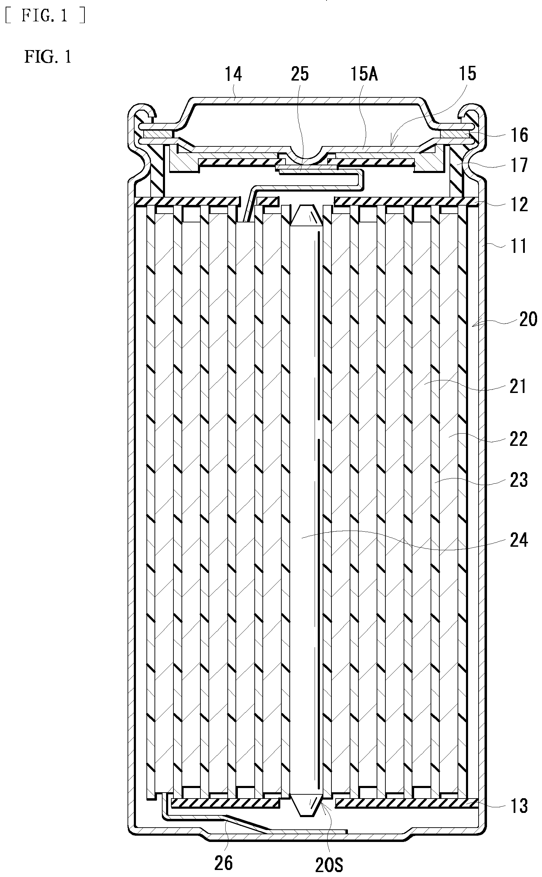

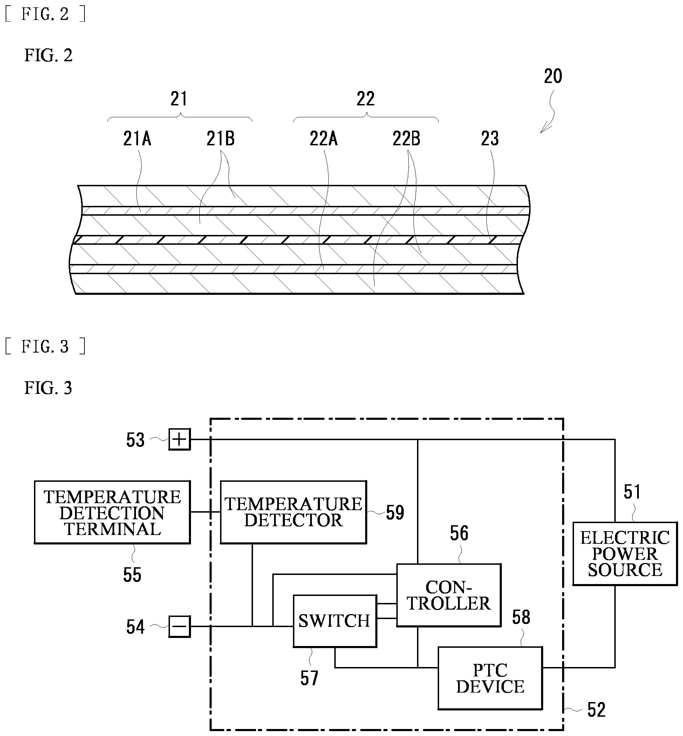

FIG. 1 illustrates a sectional configuration of the secondary battery. FIG. 2 illustrates a sectional configuration of a battery device 20 illustrated in FIG. 1. Note that FIG. 2 illustrates only a portion of the battery device 20.

As illustrated in FIGs. 1 and 2, the secondary battery mainly includes a battery can 11, a pair of insulating plates 12 and 13, a battery cover 14, the battery device 20, a positive electrode lead 25, and a negative electrode lead 26. The secondary battery to be described here is a secondary battery of a cylindrical type. The secondary battery of the cylindrical type includes the battery can 11 having a cylindrical shape that contains the battery device 20.

### [Battery Can, Etc.]

As illustrated in FIG. 1, the battery can 11 is a container member that contains, for example, the battery device 20. The battery can 11 has a hollow structure with a closed end part and an open end part, and includes one or more of metal materials including, without limitation, iron, aluminum, an iron alloy, and an aluminum alloy. The battery can 11 has a surface that may be plated with a metal material such as nickel.

The insulating plates 12 and 13 are disposed in such a manner as to be opposed to each other with the battery device 20 interposed therebetween. Thus, the battery device 20 is sandwiched between the insulating plates 12 and 13.

A battery cover 14, a safety valve mechanism 15, and a thermosensitive resistive device (PTC device) 16 are crimped to the open end part, which is one end part of the battery can 11 that is opened, by means of a gasket 17. The open end part of the battery can 11 is thereby sealed by the battery cover 14. Here, the battery cover 14 includes a material similar to the material included in the battery can 11. The safety valve mechanism 15 and the PTC device 16 are each disposed on an inner side of the battery cover 14. The safety valve mechanism 15 is electrically coupled to the battery cover 14 with the PTC device 16 interposed therebetween. The gasket 17 includes an insulating material and has a surface on which a material such as asphalt may be applied.

In the safety valve mechanism 15, a disk plate 15A inverts when an internal pressure of the battery can 11 reaches a certain level or higher due to an event such as an internal short-circuit or heating from outside, thereby cutting off the electrical coupling between the battery cover 14 and the battery device 20. Electric resistance of the PTC device 16 increases in accordance with a rise in temperature, in order to prevent abnormal heat generation resulting from a large current.

### [Battery Device]

As illustrated in FIGs. 1 and 2, the battery device 20 is a power generation device that includes the positive electrode 21, the negative electrode 22, a separator 23, and the electrolytic solution (not illustrated).

The battery device 20 is what is called a wound electrode body, and the positive electrode 21 and the negative electrode 22 with the separator 23 interposed therebetween are therefore wound. That is, the positive electrode 21 and the negative electrode 22 are stacked on each other with the separator 23 interposed therebetween, and the stack of the positive electrode 21, the negative electrode 22, and the separator 23 is wound about a winding center space 20S. Thus, the positive electrode 21 and the negative electrode 22 are opposed to each other with the separator 23 interposed therebetween, and are wound. A center pin 24 is disposed in the winding center space 20S. However, the center pin 24 may be omitted.

### (Positive Electrode)

The positive electrode 21 includes, as illustrated in FIG. 2, a positive electrode current collector 21A and a positive electrode active material layer 21B.

The positive electrode current collector 21A has two opposed surfaces on each of which the positive electrode active material layer 21B is to be provided. The positive electrode current collector 21A includes an electrically conductive material such as a metal material. Specific examples of the metal material include aluminum.

Here, the positive electrode active material layer 21B is provided on each of the two opposed surfaces of the positive electrode current collector 21A. The positive electrode active material layer 21B includes one or more of positive electrode active materials into which lithium is insertable and from which lithium is extractable. Note that the positive electrode active material layer 21B may be provided only on one of the two opposed surfaces of the positive electrode current collector 21A on a side where the positive electrode 21 is opposed to the negative electrode 22. Further, the positive electrode active material layer 21B may further include one or more of other materials including, without limitation, a positive electrode binder and a positive electrode conductor. A method of forming the positive electrode active material layer 21B is not particularly limited and specifically includes one or more of methods including, without limitation, a coating method.

The positive electrode active material is not particularly limited in kind, and specific examples thereof include a lithium-containing compound. The lithium-containing compound is a compound that includes lithium and one or more transition metal elements as one or more constituent elements. The lithium-containing compound may further include one or more other elements as one or more constituent elements. The one or more other elements are not particularly limited in kind as long as the one or more other elements are each an element other than lithium and the transition metal elements. Specifically, the one or more other elements are any one or more of elements belonging to groups 2 to 15 in the long period periodic table of elements. The lithium-containing compound is not particularly limited in kind, and is specifically an oxide, a phosphoric acid compound, a silicic acid compound, or a boric acid compound, for example.

Specific examples of the oxide include LiNiO₂, LiCoO₂, LiCo_{0.98}Al_{0.01}Mg_{0.01}O₂, LiNi_{0.5}Co_{0.2}Mn_{0.3}O₂, and LiMn₂O₄. Specific examples of the phosphoric acid compound include LiFePO₄, LiMnPO₄, and LiFe_{0.5}Mn_{0.5}PO₄.

The positive electrode binder includes one or more of materials including, without limitation, a synthetic rubber and a polymer compound. Specific examples of the synthetic rubber include a styrene-butadiene-based rubber, a fluorine-based rubber, and ethylene propylene diene. Specific examples of the polymer compound include polyvinylidene difluoride, polyimide, and carboxymethyl cellulose.

The positive electrode conductor includes one or more of electrically conductive materials including, without limitation, a carbon material. Specific examples of the carbon material include graphite, carbon black, acetylene black, and Ketjen black. Note that the electrically conductive material may be a metal material or a polymer compound, for example.

### (Negative Electrode)

As illustrated in FIG. 2, the negative electrode 22 includes a negative electrode current collector 22A and a negative electrode active material layer 22B.

The negative electrode current collector 22A has two opposed surfaces on each of which the negative electrode active material layer 22B is to be provided. The negative electrode current collector 22A includes an electrically conductive material such as a metal material. Specific examples of the metal material include copper.

Here, the negative electrode active material layer 22B is provided on each of the two opposed surfaces of the negative electrode current collector 22A. The negative electrode active material layer 22B includes one or more of negative electrode active materials into which lithium is insertable and from which lithium is extractable. Note that the negative electrode active material layer 22B may be provided only on one of the two opposed surfaces of the negative electrode current collector 22A on a side where the negative electrode 22 is opposed to the positive electrode 21. Further, the negative electrode active material layer 22B may further include one or more of other materials including, without limitation, a negative electrode binder and a negative electrode conductor. A method of forming the negative electrode active material layer 22B is not particularly limited and specifically includes one or more of methods including, without limitation, a coating method, a vapor-phase method, a liquid-phase method, a thermal spraying method, and a firing (sintering) method.

The negative electrode active material is not particularly limited in kind, and specific examples thereof include a carbon material and a metal-based material. A reason for this is that a high energy density is obtainable. Specific examples of the carbon material include graphitizable carbon, non-graphitizable carbon, and graphite (natural graphite and artificial graphite). The metal-based material is a material that includes, as one or more constituent elements, one or more elements among metal elements and metalloid elements that are each able to form an alloy with lithium. Specific examples of such metal elements and metalloid elements include silicon and tin. The metal-based material may be a simple substance, an alloy, a compound, a mixture of two or more thereof, or a material including two or more phases thereof. Specific examples of the metal-based material include TiSi₂ and SiOₓ (0 < x ≤ 2 or 0.2 < x < 1.4).

Details of the negative electrode binder are similar to those of the positive electrode binder. Details of the negative electrode conductor are similar to those of the positive electrode conductor.

### (Separator)

As illustrated in FIG. 2, the separator 23 is an insulating porous film interposed between the positive electrode 21 and the negative electrode 22, and allows lithium ions to pass therethrough while preventing contact (a short circuit) between the positive electrode 21 and the negative electrode 22. The separator 23 includes a polymer compound such as polyethylene.

### (Electrolytic Solution)

The positive electrode 21, the negative electrode 22, and the separator 23 are each impregnated with the electrolytic solution, and the electrolytic solution has the configuration described above. That is, the electrolytic solution includes the carboxylic acid ester and the carbamic acid ester compound.

### [Positive Electrode Lead and Negative Electrode Lead]

As illustrated in FIGs. 1 and 2, the positive electrode lead 25 is coupled to the positive electrode current collector 21A of the positive electrode 21. The positive electrode lead 25 includes one or more of electrically conductive materials including, without limitation, aluminum. The positive electrode lead 25 is electrically coupled to the battery cover 14 via the safety valve mechanism 15.

As illustrated in FIGs. 1 and 2, the negative electrode lead 26 is coupled to the negative electrode current collector 22A of the negative electrode 22. The negative electrode lead 26 includes one or more of electrically conductive materials including, without limitation, nickel. The negative electrode lead 26 is electrically coupled to the battery can 11.

### <2-2. Operation>

Upon charging the secondary battery, in the battery device 20, lithium is extracted from the positive electrode 21, and the extracted lithium is inserted into the negative electrode 22 via the electrolytic solution. Upon discharging the secondary battery, in the battery device 20, lithium is extracted from the negative electrode 22, and the extracted lithium is inserted into the positive electrode 21 via the electrolytic solution. Upon charging and discharging, lithium is inserted and extracted in an ionic state.

### <2-3. Manufacturing Method>

When manufacturing the secondary battery, the positive electrode 21 and the negative electrode 22 are each fabricated, and the secondary battery is assembled using the positive electrode 21, the negative electrode 22, and the electrolytic solution, following which stabilization treatment of the secondary battery is performed, according to an example procedure to be described below. Note that the procedure for preparing the electrolytic solution is as described above.

### [Fabrication of Positive Electrode]

First, a mixture (a positive electrode mixture) in which the positive electrode active material, the positive electrode binder, and the positive electrode conductor are mixed with each other is put into a solvent to thereby prepare a positive electrode mixture slurry in a paste form. The solvent may be an aqueous solvent, or may be an organic solvent. Details of the solvent described here apply also to the following. Thereafter, the positive electrode mixture slurry is applied on the two opposed surfaces of the positive electrode current collector 21A to thereby form the positive electrode active material layers 21B. Thereafter, the positive electrode active material layers 21B may be compression-molded by means of, for example, a roll pressing machine. In this case, the positive electrode active material layers 21B may be heated. The positive electrode active material layers 21B may be compression-molded multiple times. In this manner, the positive electrode active material layers 21B are formed on the respective two opposed surfaces of the positive electrode current collector 21A. Thus, the positive electrode 21 is fabricated.

### [Fabrication of Negative Electrode]

The negative electrode 22 is formed by a procedure similar to the fabrication procedure of the positive electrode 21 described above. Specifically, first, a mixture (a negative electrode mixture) in which the negative electrode active material, the negative electrode binder, and the negative electrode conductor are mixed with each other is put into a solvent to thereby prepare a negative electrode mixture slurry in a paste form. Thereafter, the negative electrode mixture slurry is applied on the two opposed surfaces of the negative electrode current collector 22A to thereby form the negative electrode active material layers 22B. Thereafter, the negative electrode active material layers 22B may be compression-molded. In this manner, the negative electrode active material layers 22B are formed on the respective two opposed surfaces of the negative electrode current collector 22A. Thus, the negative electrode 22 is fabricated.

### [Assembly of Secondary Battery]

First, the positive electrode lead 25 is coupled to the positive electrode current collector 21A of the positive electrode 21 by a method such as a welding method, and the negative electrode lead 26 is coupled to the negative electrode current collector 22A of the negative electrode 22 by a method such as a welding method. Thereafter, the positive electrode 21 and the negative electrode 22 are stacked on each other with the separator 23 interposed therebetween, following which the stack of the positive electrode 21, the negative electrode 22, and the separator 23 is wound to thereby form a wound body (not illustrated) having the winding center space 20S. The wound body has a configuration similar to that of the battery device 20 except that the positive electrode 21, the negative electrode 22, and the separator 23 are each not impregnated with the electrolytic solution. Thereafter, the center pin 24 is disposed in the winding center space 20S of the wound body.

Thereafter, with the wound body interposed between the insulating plates 12 and 13, the wound body is placed inside the battery can 11 through the open end part thereof together with the insulating plates 12 and 13. In this case, the positive electrode lead 25 is coupled to the safety valve mechanism 15 by a method such as a welding method, and the negative electrode lead 26 is coupled to the battery can 11 by a method such as a welding method. Thereafter, the electrolytic solution is injected into the battery can 11 to thereby impregnate the wound body with the electrolytic solution. The positive electrode 21, the negative electrode 22, and the separator 23 are thereby each impregnated with the electrolytic solution. The battery device 20 is thus fabricated.

Lastly, the battery cover 14, the safety valve mechanism 15, and the PTC device 16 are placed inside the battery can 11 through the open end part thereof. Thereafter, the open end part of the battery can 11 is crimped by means of the gasket 17. In this manner, the battery cover 14, the safety valve mechanism 15, and the PTC device 16 are secured to the open end part of the battery can 11, and the battery device 20 is sealed inside the battery can 11. As a result, the secondary battery is assembled.

### [Stabilization of Secondary Battery]

The secondary battery after being assembled is charged and discharged. Various conditions including, for example, an environmental temperature, the number of times of charging and discharging (the number of cycles), and charging and discharging conditions may be set as desired. In this manner, a film is formed on the surface of each of the positive electrode 21 and the negative electrode 22, and the state of the secondary battery is electrochemically stabilized. As a result, the secondary battery is completed.

### <2-4. Action and Effects>

According to the secondary battery, the secondary battery includes an electrolytic solution, and the electrolytic solution has the above-described configuration. It is therefore possible to achieve a superior high-temperature storage characteristic and a superior low-temperature discharge characteristic for the reason mentioned in the above description of the electrolytic solution.

In particular, the secondary battery may include a lithium-ion secondary battery. This makes it possible to obtain a sufficient battery capacity stably through the use of insertion and extraction of lithium. Accordingly, it is possible to achieve higher effects.

Other action and effects of the secondary battery are similar to those of the electrolytic solution described above.

### <3. Modifications>

A description is given next of modifications.

The configuration of the secondary battery described above is appropriately modifiable as described below. Note that any of the following series of modifications may be combined with each other.

### [Modification 1]

The separator 23 that is a porous film is used. However, although not specifically illustrated here, a separator of a stacked type including a polymer compound layer may be used instead of the separator 23.

Specifically, the separator of the stacked type includes a porous film having two opposed surfaces, and the polymer compound layer provided on one of or each of the two opposed surfaces of the porous film. A reason for this is that adherence of the separator to each of the positive electrode 21 and the negative electrode 22 improves to suppress winding displacement of the battery device 20. This suppresses swelling of the secondary battery even if the decomposition reaction of the electrolytic solution occurs. Details of the porous film are as described above. The polymer compound layer includes a polymer compound such as polyvinylidene difluoride. A reason for this is that the polymer compound such as polyvinylidene difluoride is superior in physical strength and electrochemically stable.

Note that the porous film, the polymer compound layer, or both may each include one or more kinds of insulating particles. A reason for this is that the insulating particles promote heat dissipation upon heat generation by the secondary battery, thus improving safety or heat resistance of the secondary battery. The insulating particles include inorganic particles, resin particles, or both. Specific examples of the inorganic particles include particles of aluminum oxide, aluminum nitride, boehmite, silicon oxide, titanium oxide, magnesium oxide, and zirconium oxide. Specific examples of the resin particles include particles of acrylic resin and styrene resin.

In a case of fabricating the separator of the stacked type, a precursor solution including, without limitation, the polymer compound and a solvent is prepared, following which the precursor solution is applied on one of or each of the two opposed surfaces of the porous film. In this case, instead of applying the precursor solution on the porous film, the porous film may be immersed in the precursor solution. The precursor solution may include insulating particles.

In the case where the separator of the stacked type is used also, lithium ions are movable between the positive electrode 21 and the negative electrode 22, and similar effects are therefore obtainable. In this case, in particular, the secondary battery improves in safety, as described above. Accordingly, it is possible to achieve higher effects.

### [Modification 2]

The electrolytic solution, which is a liquid electrolyte, is used. However, although not specifically illustrated here, an electrolyte layer, which is a gel electrolyte, may be used instead of the electrolytic solution.

In the battery device 20 including the electrolyte layer, the positive electrode 21 and the negative electrode 22 are stacked on each other with the separator 23 and the electrolyte layer interposed therebetween, and the stack of the positive electrode 21, the negative electrode 22, the separator 23, and the electrolyte layer is wound. The electrolyte layer is interposed between the positive electrode 21 and the separator 23, and between the negative electrode 22 and the separator 23. Note that the electrolyte layer may be interposed only between the positive electrode 21 and the separator 23, or may be interposed only between the negative electrode 22 and the separator 23.

Specifically, the electrolyte layer includes a polymer compound together with the electrolytic solution. The electrolytic solution is held by the polymer compound. A reason for this is that leakage of the electrolytic solution is prevented. The configuration of the electrolytic solution is as described above. The polymer compound includes, for example, polyvinylidene difluoride. When forming the electrolyte layer, a precursor solution including, for example, the electrolytic solution, the polymer compound, and a solvent is prepared, following which the precursor solution is applied on one side or both sides of the positive electrode 21 and on one side or both sides of the negative electrode 22.

When the electrolyte layer is used also, lithium ions are movable between the positive electrode 21 and the negative electrode 22 via the electrolyte layer, and similar effects are therefore obtainable. In this case, in particular, leakage of the electrolytic solution is prevented, as described above. Accordingly, it is possible to achieve higher effects.

### <4. Applications of Secondary Battery>

Lastly, a description is given of applications (application examples) of the secondary battery.

Applications of the secondary battery are not particularly limited. The secondary battery used as a power source may serve as a main power source or an auxiliary power source of, for example, electronic equipment and an electric vehicle. The main power source is preferentially used regardless of the presence of any other power source. The auxiliary power source is used in place of the main power source, or is switched from the main power source.

Specific examples of the applications of the secondary battery include: electronic equipment; apparatuses for data storage; electric power tools; battery packs to be mounted on, for example, electronic equipment; medical electronic equipment; electric vehicles; and electric power storage systems. Examples of the electronic equipment include video cameras, digital still cameras, mobile phones, laptop personal computers, headphone stereos, portable radios, and portable information terminals. Examples of the apparatuses for data storage include backup power sources and memory cards. Examples of the electric power tools include electric drills and electric saws. Examples of the medical electronic equipment include pacemakers and hearing aids. Examples of the electric vehicles include electric automobiles including hybrid automobiles. Examples of the electric power storage systems include home battery systems or industrial battery systems for accumulation of electric power for a situation such as emergency. The above-described applications may each use one secondary battery, or may each use multiple secondary batteries.

The battery packs may each include a single battery, or may each include an assembled battery. The electric vehicle is a vehicle that operates (travels) using the secondary battery as a driving power source, and may be a hybrid automobile that is additionally provided with a driving source other than the secondary battery. In an electric power storage system for home use, electric power accumulated in the secondary battery that is an electric power storage source may be utilized for using, for example, home appliances.

An application example of the secondary battery will now be described in detail. The configuration described below is merely an example, and is appropriately modifiable.

FIG. 3 illustrates a block configuration of a battery pack. The battery pack described here is a battery pack (what is called a soft pack) including one secondary battery, and is to be mounted on, for example, electronic equipment typified by a smartphone.

As illustrated in FIG. 3, the battery pack includes an electric power source 51 and a circuit board 52. The circuit board 52 is coupled to the electric power source 51, and includes a positive electrode terminal 53, a negative electrode terminal 54, and a temperature detection terminal 55.

The electric power source 51 includes one secondary battery. The secondary battery has a positive electrode lead coupled to the positive electrode terminal 53 and a negative electrode lead coupled to the negative electrode terminal 54. The electric power source 51 is chargeable and dischargeable by being coupled to outside via the positive electrode terminal 53 and the negative electrode terminal 54. The circuit board 52 includes a controller 56, a switch 57, a PTC device 58, and a temperature detector 59. However, the PTC device 58 may be omitted.

The controller 56 includes, for example, a central processing unit (CPU) and a memory, and controls an overall operation of the battery pack. The controller 56 detects and controls a use state of the electric power source 51 on an as-needed basis.

If a voltage of the electric power source 51 (the secondary battery) reaches an overcharge detection voltage or an overdischarge detection voltage, the controller 56 turns off the switch 57. This prevents a charging current from flowing into a current path of the electric power source 51. The overcharge detection voltage is not particularly limited, and is specifically 4.2 V ± 0.05 V. The overdischarge detection voltage is not particularly limited, and is specifically 2.4 V ± 0.1 V.

The switch 57 includes, for example, a charge control switch, a discharge control switch, a charging diode, and a discharging diode. The switch 57 performs switching between coupling and decoupling between the electric power source 51 and external equipment in accordance with an instruction from the controller 56. The switch 57 includes, for example, a metal-oxide-semiconductor field-effect transistor (MOSFET). The charging and discharging currents are detected based on an ON-resistance of the switch 57.

The temperature detector 59 includes a temperature detection device such as a thermistor. The temperature detector 59 measures a temperature of the electric power source 51 using the temperature detection terminal 55, and outputs a result of the temperature measurement to the controller 56. The result of the temperature measurement to be obtained by the temperature detector 59 is used, for example, when the controller 56 performs charge/discharge control upon abnormal heat generation or when the controller 56 performs a correction process upon calculating a remaining capacity.

### Examples

A description is given of Examples of the technology.

### <Experiment Examples 1 to 14 and Comparative Examples 1 to 4>

Secondary batteries were fabricated, following which the secondary batteries were each evaluated for a battery characteristic as described below.

### [Fabrication of Secondary Battery]

The secondary batteries (lithium-ion secondary batteries of the laminated-film type) illustrated in FIGs. 1 and 2 were fabricated in accordance with the following procedure.

### (Fabrication of Positive Electrode)

First, 91 parts by mass of the positive electrode active material (lithium cobalt oxide (LiCoO₂)), 3 parts by mass of the positive electrode binder (polyvinylidene difluoride), and 6 parts by mass of the positive electrode conductor (graphite) were mixed with each other to thereby obtain a positive electrode mixture. Thereafter, the positive electrode mixture was put into a solvent (N-methyl-2-pyrrolidone that was the organic solvent), following which the organic solvent was stirred to thereby prepare a positive electrode mixture slurry in a paste form. Thereafter, the positive electrode mixture slurry was applied on the two opposed surfaces of the positive electrode current collector 21A (a band-shaped aluminum foil having a thickness of 12 µm) by means of a coating apparatus, following which the applied positive electrode mixture slurry was dried to thereby form the positive electrode active material layers 21B. Lastly, the positive electrode active material layers 21B were compression-molded by means of a roll pressing machine. In this manner, the positive electrode 21 was fabricated.

### (Fabrication of Negative Electrode)

First, 93 parts by mass of the negative electrode active material (artificial graphite that was the carbon material) and 7 parts by mass of the negative electrode binder (polyvinylidene difluoride) were mixed with each other to thereby obtain a negative electrode mixture. Thereafter, the negative electrode mixture was put into a solvent (N-methyl-2-pyrrolidone that was the organic solvent), following which the organic solvent was stirred to thereby prepare a negative electrode mixture slurry in a paste form. Thereafter, the negative electrode mixture slurry was applied on the two opposed surfaces of the negative electrode current collector 22A (a band-shaped copper foil having a thickness of 15 µm) by means of a coating apparatus, following which the applied negative electrode mixture slurry was dried to thereby form the negative electrode active material layers 22B. Lastly, the negative electrode active material layers 22B were compression-molded by means of a roll pressing machine. In this manner, the negative electrode 22 was fabricated.

### (Preparation of Electrolytic Solution)

First, the solvent was prepared. Used as the solvent were ethylene carbonate that was the carbonic-acid-ester-based compound (the cyclic carbonic acid ester) and propyl propionate (PP) that was the carboxylic acid ester.

Thereafter, the electrolyte salt was added to the solvent, following which the solvent was stirred. Used as the electrolyte salt were lithium bis(fluorosulfonyl)imide (LiFSI) and lithium hexafluorophosphate (LiPF₆).

Lastly, the carbamic acid ester compound was added to the solvent, following which the solvent was stirred. Respective kinds of the carbamic acid ester compounds were as listed in Table 1.

Used as the carbamic acid ester compound were methyl methylcarbamate (MCM), ethyl methylcarbamate (MCE), sec-butyl methylcarbamate (MCSB), pentyl methylcarbamate (MCP), ethyl ethylcarbamate (ECE), methyl n-propylcarbamate (PRCM), methyl isopropylcarbamate (IPRCM), and methyl pentylcarbamate (PCM).

As a result, the electrolytic solution including the carboxylic acid ester and the carbamic acid ester compound was prepared.

Note that, for comparison, the electrolytic solution was prepared by a similar procedure except that the carbamic acid ester compound was not used.

In addition, for comparison, the electrolytic solution was prepared by a similar procedure except that another compound was used instead of the carbamic acid ester compound. Used as the other compound were methyl carbamate (CM), n-hexyl methylcarbamate (MCH), and methyl n-hexylcarbamate (HCM).

### (Assembly of Secondary Battery)

First, the positive electrode lead 25 (an aluminum foil) was welded to the positive electrode current collector 21A of the positive electrode 21, and the negative electrode lead 26 (a copper foil) was welded to the negative electrode current collector 22A of the negative electrode 22.

Thereafter, the positive electrode 21 and the negative electrode 22 were stacked on each other with the separator 23 (a fine porous polyethylene film having a thickness of 15 µm) interposed therebetween, following which the stack of the positive electrode 21, the negative electrode 22, and the separator 23 was wound to thereby fabricate a wound body having the winding center space 20S. Thereafter, the center pin 24 was disposed in the winding center space 20S.

Thereafter, the insulating plates 12 and 13 were placed inside the battery can 11 through the open end part thereof together with the wound body. In this case, the positive electrode lead 25 was welded to the safety valve mechanism 15, and the negative electrode lead 26 was welded to the battery can 11. Thereafter, the electrolytic solution was injected into the battery can 11. In this manner, the wound body was impregnated with the electrolytic solution. As a result, the battery device 20 was fabricated.

Lastly, the battery cover 14, the safety valve mechanism 15, and the PTC device 16 were placed inside the battery can 11 through the open end part thereof, following which the open end part of the battery can 11 was crimped by means of the gasket 17. Accordingly, the battery can 11 was sealed, and thus the secondary battery was assembled.

### (Stabilization of Secondary Battery)

The secondary battery was charged and discharged for one cycle in an ambient temperature environment (at a temperature of 23°C). Upon charging, the secondary battery was charged with a constant current of 0.1 C until a voltage reached 4.2 V, and was thereafter charged with a constant voltage of that value, 4.2 V, until a current reached 0.05 C. Upon discharging, the secondary battery was discharged with a constant current of 0.1 C until the voltage reached 3.0 V. Note that 0.1 C was a value of a current that caused a battery capacity (a theoretical capacity) to be completely discharged in 10 hours, and 0.05 C was a value of a current that caused the battery capacity to be completely discharged in 20 hours.

A film was thus formed on the surface of each of the positive electrode 21 and the negative electrode 22, and the state of the secondary battery was therefore electrochemically stabilized. As a result, the secondary battery was completed.

Note that, after the completion of the secondary battery, the electrolytic solution was analyzed by inductively coupled plasma (ICP) optical emission spectroscopy. As a result, the content (vol%) of the carboxylic acid ester in the solvent, the content (wt%) of the carbamic acid ester compound in the electrolytic solution, and the content (mol/kg) of the electrolyte salt with respect to the solvent were as listed in Table 1.

### [Characteristic Evaluation of Secondary Battery]

Evaluation of the secondary batteries for their characteristics (a high-temperature storage characteristic and a low-temperature discharge characteristic) revealed the results presented in Table 1.

### (High-temperature Storage Characteristic)

First, the secondary battery was charged and discharged in an ambient temperature environment (at a temperature of 23°C) to thereby measure a discharge capacity (a pre-storage discharge capacity). Charging and discharging conditions were similar to the charging and discharging conditions for the stabilization of the secondary battery described above.

Thereafter, the secondary battery was charged until a charging rate reached 100% in the same environment. In this case, the secondary battery was charged with a constant current of 1 C. Note that 1 C was a value of a current that caused the battery capacity to be completely discharged in 1 hour. Thereafter, the charged secondary battery was stored inside a thermostatic chamber (at a temperature of 60°C) (for a storing period of 1 month), following which the secondary battery was discharged to measure a discharge capacity (a post-storage discharge capacity). In this case, the secondary battery was discharged with a constant current of 1 C until the voltage reached 3.0 V.

Lastly, a high-temperature retention rate as an index for evaluating the high-temperature storage characteristic was calculated based on the following calculation expression: high-temperature retention rate (%) = (post-storage discharge capacity/pre-storage discharge capacity) × 100.

### (Low-temperature Discharge Characteristic)

First, the secondary battery was charged and discharged in an ambient temperature environment (at a temperature of 23°C) to thereby measure a discharge capacity (a discharge capacity in the ambient temperature environment). Charging and discharging conditions were similar to the charging and discharging conditions for the stabilization of the secondary battery described above.

Thereafter, the secondary battery was charged until a charging rate reached 100% in the same environment. In this case, the secondary battery was charged with a constant current of 1 C. Thereafter, the secondary battery was discharged inside a low-temperature chamber (at a temperature of -30°C) to thereby measure a discharge capacity (a discharge capacity in the low-temperature environment). In this case, the secondary battery was discharged with a constant current of 1 C until the voltage reached 2.5 V.

Lastly, a low-temperature retention rate as an index for evaluating the low-temperature discharge characteristic was calculated based on the following calculation expression: low-temperature retention rate (%) = (discharge capacity in low-temperature environment/discharge capacity in ambient temperature environment) × 100.

### [Table 1]

**Table 1**

| | Carboxylic acid ester | | Carbamic acid ester compound | | Electrolyte salt | | High-temperature retention rate (%) | Low-temperature retention rate (%) |
|---|---|---|---|---|---|---|---|---|
| | Kind | Content (vol%) | Kind | Content (wt%) | Kind | Content (mol/kg) | | |
| Example 1 | PP | 70 | MCM | 0.5 | LiFSI | 1.0 | 95 | 83 |
| Example 2 | PP | 70 | MCE | 0.5 | LiFSI | 1.0 | 90 | 80 |
| Example 3 | PP | 70 | MCSB | 0.5 | LiFSI | 1.0 | 82 | 57 |
| Example 4 | PP | 70 | MCP | 0.5 | LiFSI | 1.0 | 78 | 56 |
| Example 5 | PP | 70 | ECE | 0.5 | LiFSI | 1.0 | 87 | 71 |
| Example 6 | PP | 70 | PRCM | 0.5 | LiFSI | 1.0 | 89 | 74 |
| Example 7 | PP | 70 | IPRCM | 0.5 | LiFSI | 1.0 | 84 | 63 |
| Example 8 | PP | 70 | PCM | 0.5 | LiFSI | 1.0 | 80 | 60 |
| Example 9 | PP | 70 | MCM | 0.5 | LiPF₆ | 1.0 | 82 | 57 |
| Example 10 | PP | 70 | MCM | 0.5 | LiFSI+LiPF₆ | 0.5+0.5 | 85 | 63 |
| Comparative example 1 | PP | 70 | - | - | LiFSI | 1.0 | 75 | 48 |
| Comparative example 2 | PP | 70 | CM | 0.5 | LiFSI | 1.0 | 72 | 52 |
| Comparative example 3 | PP | 70 | MCH | 0.5 | LiFSI | 1.0 | 69 | 46 |
| Comparative example 4 | PP | 70 | HCM | 0.5 | LiFSI | 1.0 | 71 | 45 |

### [Discussion]

As indicated in Table 1, each of the high-temperature retention rate and the low-temperature retention rate varied greatly depending on the configuration of the electrolytic solution. In the following description, the high-temperature retention rate and the low-temperature retention rate in a case where the electrolytic solution included neither the carbamic acid ester compound nor any other compound (Comparative example 1) are taken as a comparative reference.

When the electrolytic solution included another compound together with the carboxylic acid ester (Comparative examples 2 to 4), the high-temperature retention rate, the low-temperature retention rate, or both decreased. In contrast, when the electrolytic solution included the carbamic acid ester compound together with the carboxylic acid ester (Examples 1 to 10), both the high-temperature retention rate and the low-temperature retention rate increased.

In particular, when the electrolytic solution included the carbamic acid ester compound together with the carboxylic acid ester, tendencies to be described below were obtained. First, both the high-temperature retention rate and the low-temperature retention rate increased independently of the kind of the carbamic acid ester compound. In addition, when the electrolyte salt included lithium bis(fluorosulfonyl)imide, each of the high-temperature retention rate and the low-temperature retention rate further increased.

### <Examples 11 to 23 and Comparative Examples 5 to 8>

As indicated in Table 2, secondary batteries were fabricated by a procedure similar to that in Example 1, except that the configuration (such as the kind and content of the carboxylic acid ester) of the solvent was changed, following which the secondary batteries were each evaluated for a characteristic.

Additionally used as the carboxylic acid ester were ethyl acetate (EA), propyl acetate (PA), butyl acetate (BA), methyl propionate (MP), ethyl propionate (EP), methyl butyrate (MB), and ethyl butyrate (EB). In addition, diethyl carbonate (DEC) that is a carbonic-acid-ester-based compound (a chain carbonic acid ester) was also used together with the carboxylic acid ester on an as-needed basis.

Note that, for comparison, as indicated in Table 3, another compound was used instead of the carboxylic acid ester. Used as the other compound were propyl formate (PF), methyl acetate (MA), butyl propionate (BP), and diethyl carbonate (DEC).

### [Table 2]

**Table 2**

| | Carboxylic acid ester Chain carbonic acid ester | | Carbamic acid ester compound | | Electrolyte salt | | High-temperature retention rate (%) | Low-temperature retention rate (%) |
|---|---|---|---|---|---|---|---|---|
| | Kind | Content (vol%) | Kind | Content (wt%) | Kind | Content (mol/kg) | | |
| Example 11 | PP | 20 | MCM | 0.5 | LiFSI | 1.0 | 93 | 62 |
| Example 12 | PP | 30 | MCM | 0.5 | LiFSI | 1.0 | 94 | 66 |
| Example 13 | PP | 50 | MCM | 0.5 | LiFSI | 1.0 | 96 | 76 |
| Example 1 | PP | 70 | MCM | 0.5 | LiFSI | 1.0 | 95 | 83 |
| Example 14 | PP | 80 | MCM | 0.5 | LiFSI | 1.0 | 88 | 85 |
| Example 15 | EA | 70 | MCM | 0.5 | LiFSI | 1.0 | 78 | 83 |
| Example 16 | PA | 70 | MCM | 0.5 | LiFSI | 1.0 | 90 | 82 |
| Example 17 | BA | 70 | MCM | 0.5 | LiFSI | 1.0 | 94 | 80 |
| Example 18 | MP | 70 | MCM | 0.5 | LiFSI | 1.0 | 80 | 85 |
| Example 19 | EP | 70 | MCM | 0.5 | LiFSI | 1.0 | 88 | 83 |
| Example 20 | MB | 70 | MCM | 0.5 | LiFSI | 1.0 | 89 | 80 |
| Example 21 | EB | 70 | MCM | 0.5 | LiFSI | 1.0 | 92 | 73 |
| Example 22 | EP+PP | 40+30 | MCM | 0.5 | LiFSI | 1.0 | 82 | 78 |
| Example 23 | PP+DEC | 40+30 | MCM | 0.5 | LiFSI | 1.0 | 78 | 71 |

### [Table 3]

**Table 3**

| | Carboxylic acid ester | | Carbamic acid ester compound | | Electrolyte salt | | High-temperature retention rate (%) | Low-temperature retention rate (%) |
|---|---|---|---|---|---|---|---|---|
| | Kind | Content (vol%) | Kind | Content (wt%) | Kind | Content (mol/kg) | | |
| Comparative example 1 | PP | 70 | - | - | LiFSI | 1.0 | 75 | 48 |
| Comparative example 5 | PF | 70 | MCM | 0.5 | LiFSI | 1.0 | 57 | 44 |
| Comparative example 6 | MA | 70 | MCM | 0.5 | LiFSI | 1.0 | 66 | 48 |
| Comparative example 7 | BP | 70 | MCM | 0.5 | LiFSI | 1.0 | 80 | 46 |
| Comparative example 8 | DEC | 70 | MCM | 0.5 | LiFSI | 1.0 | 79 | 42 |

As indicated in Table 2 and Table 3, results similar to the results in Table 1 described above were obtained even if the configuration of the solvent was changed. That is, when the solvent included another compound together with the carbamic acid ester compound (Comparative examples 5 to 8), the high-temperature retention rate, the low-temperature retention rate, or both descreased. In contrast, when the solvent included the carboxylic acid ester together with the carbamic acid ester compound (Examples 1 and 11 to 23), both the high-temperature retention rate and the low-temperature retention rate increased.

In particular, when the solvent included the carboxylic acid ester together with the carbamic acid ester compound, if the content of the carboxylic acid ester in the solvent was within a range from 30 vol% to 70 vol% both inclusive, the high-temperature retention rate further increased, and the low-temperature retention rate also further increased.

### <Examples 24 to 29>

As indicated in Table 4, secondary batteries were fabricated by a procedure similar to that in Example 1, except that the content of the carbamic acid compound in the electrolytic solution was changed, following which the secondary batteries were each evaluated for a characteristic.

### [Table 4]

**Table 4**

| | Carboxylic acid ester | | Carbamic acid ester compound | | Electrolyte salt | | High-temperature retention rate (%) | Low-temperature retention rate (%) |
|---|---|---|---|---|---|---|---|---|
| | Kind | Content (vol%) | Kind | Content (wt%) | Kind | Content (mol/kg) | | |
| Example 24 | PP | 70 | MCM | 0.001 | LiFSI | 1.0 | 77 | 52 |
| Example 25 | PP | 70 | MCM | 0.01 | LiFSI | 1.0 | 80 | 56 |
| Example 26 | PP | 70 | MCM | 0.1 | LiFSI | 1.0 | 84 | 70 |
| Example 1 | PP | 70 | MCM | 0.5 | LiFSI | 1.0 | 95 | 83 |
| Example 27 | PP | 70 | MCM | 1 | LiFSI | 1.0 | 94 | 79 |
| Example 28 | PP | 70 | MCM | 5 | LiFSI | 1.0 | 90 | 63 |
| Example 29 | PP | 70 | MCM | 10 | LiFSI | 1.0 | 79 | 51 |
| Comparative example 1 | PP | 70 | - | - | LiFSI | 1.0 | 75 | 48 |

As indicated in Table 4, when the content of the carbamic acid ester compound in the electrolytic solution was within a range from 0.01 wt% to 5wt% both inclusive, each of the high-temperature retention rate and the low-temperature retention rate further increased.

### [Conclusion]

Based upon the result presented in Table 1 to 4, when the electrolytic solution included the carboxylic acid ester and the carbamic acid ester compound, a high high-temperature retention rate was obtained and a high low-temperature retention rate was also obtained. It was thus possible for the secondary battery to achieve a superior high-temperature storage characteristic and a superior low-temperature discharge characteristic.

Although the technology has been described above with reference to some embodiments and Examples, the configuration of the technology is not limited to those described with reference to the embodiments and Examples above, and is therefore modifiable in a variety of ways.

Specifically, the description has been given of the case where the secondary battery has a battery structure of the cylindrical type. However, the battery structure of the secondary battery is not particularly limited, and may thus be any other battery structure, for example, of a laminated-film type, a prismatic type, a coin type, or a button type.

Further, the description has been given of the case where the battery device has a device structure of a wound type. However, the device structure of the battery device is not particularly limited. Therefore, the device structure may be any other device structure, for example, of a stacked type or a zigzag folded type. In the stacked type, the positive electrode and the negative electrode are stacked on each other with the separator interposed therebetween. In the zigzag folded type, the positive electrode and the negative electrode are opposed to each other with the separator interposed therebetween, and are folded in a zigzag manner.

Further, although the description has been given of the case where the electrode reactant is lithium, the electrode reactant is not particularly limited. Specifically, the electrode reactant may be another alkali metal such as sodium or potassium, or be an alkaline earth metal such as beryllium, magnesium, or calcium, as described above

The effects described herein are mere examples, and effects of the technology are therefore not limited to those described herein. Accordingly, the technology may achieve any other effect.

## Claims

1. A secondary battery comprising:
a positive electrode;
a negative electrode; and
an electrolytic solution including a carboxylic acid ester represented by Formula (1) and a carbamic acid ester compound represented by Formula (2),
R1-C(=O)-O-R2 ...... (1)
where
each of R1 and R2 is an alkyl group, and
carbon number of R1 is greater than or equal to 1 and less than or equal to 3, and a sum of the carbon number of R1 and carbon number of R2 is greater than or equal to 3 and less than or equal to 5,
R3-NH-C(=O)-O-R4 ...... (2)
where
each of R3 and R4 is an alkyl group, and
a sum of carbon number of R3 and carbon number of R4 is greater than or equal to 2 and less than or equal to 6.

2. The secondary battery according to claim 1, wherein
the electrolytic solution includes a solvent,
the solvent includes the carboxylic acid ester, and
a content of the carboxylic acid ester in the solvent is greater than or equal to 30 volume percent and less than or equal to 70 volume percent.

3. The secondary battery according to claim 1 or 2, wherein a content of the carbamic acid ester compound in the electrolytic solution is greater than or equal to 0.01 weight percent and less than or equal to 5 weight percent.

4. The secondary battery according to any one of claims 1 to 3, wherein
the electrolytic solution further includes an electrolyte salt, and
the electrolyte salt includes lithium bis(fluorosulfonyl)imide.

5. The secondary battery according to any one of claims 1 to 4, wherein the secondary battery comprises a lithium-ion secondary battery.

6. An electrolytic solution for a secondary battery, the electrolytic solution comprising:
a carboxylic acid ester represented by Formula (1); and
a carbamic acid ester compound represented by Formula (2),
R1-C(=O)-O-R2 ...... (1)
where
each of R1 and R2 is an alkyl group, and
carbon number of R1 is greater than or equal to 1 and less than or equal to 3, and a sum of the carbon number of R1 and carbon number of R2 is greater than or equal to 3 and less than or equal to 5,
R3-NH-C(=O)-O-R4 ...... (2)
where
each of R3 and R4 is an alkyl group, and
a sum of carbon number of R3 and carbon number of R4 is greater than or equal to 2 and less than or equal to 6.
